# EUROPÄISCHE PATENTANMELDUNG

(11) **EP 2 154 339 A1**
(43) Veröffentlichungstag der Anmeldung: **17.02.2010**
(21) Anmeldenummer: 09009565.4
(22) Anmeldetag: 23.07.2009
(51) Int. Cl.: F01M 11/00, F16H 57/04

(54) **Ölwanne mit Öfilter an Trägereinheit**

(30) Priorität: 13.08.2008 DE 102008038958
(71) Anmelder: IBS Filtran Kunststoff-/Metallerzeugnisse GmbH, 51597 Morsbach (DE)
(72) Erfinder: Beer, Markus, 51597 Morsbach (DE); Sahm, Dietmar, 51580 Reichshof (DE); Stausberg, Wolfgang, 51597 Morsbach (DE); Piehlk, Andreas, 57258 Freudenberg (DE)
(74) Vertreter: Lang, Friedrich

(57) **Zusammenfassung**

Die Erfindung betrifft eine Ölwanne (1), vorzugsweise aus Kunststoff oder Metall, für Motoren oder Getriebe, mit einem Filtergehäuse (9), umfassend eine Filtergehäuseoberschale (3), eine Filtergehäuseunterschale (5), ein Filtermedium (4), einen Filtereinlass (6) und einen Filterauslass (2), und mit einer Ölablass- öffnung im Bodenbereich der Ölwanne (1), die in einer Weise ausgebildet ist, dass sie mittels einer von der Ölwannenunterseite kommenden Ölablassschraube (8) mit Außengewinde verschließbar ist. Erfindungsgemäß weist die Ölwanne (1) eine Trägereinheit (11) mit einem Rahmen (10) auf, an dem das Filtergehäuse (9) befestigt ist und der bei einer Befestigung der Ölwanne (1) an der dazugehörigen Einheit, insbesondere an einem Motorblock oder einer Getriebeeinheit, als Dichtung dient.

## Beschreibung

### Gebiet der Erfindung

Die Erfindung betrifft eine Ölwanne, vorzugsweise aus Kunststoff oder Metall, für Motoren oder Getriebe, mit einem Filtergehäuse, umfassend eine Filtergehäuseoberschale, eine Filtergehäuseunterschale, ein Filtermedium, einen Filtereinlass und einen Filterauslass, und einer Ölablassöffnung im Bodenbereich der Ölwanne, die in der Weise ausgebildet ist, dass sie mittels einer von der Ölwannenunterseite kommenden Ölablassschraube mit Außengewinde verschließbar ist.

### Stand der Technik

Aus dem Stand der Technik bekannte Ölwannen, vorzugsweise aus Metall oder Kunststoff, weisen üblicherweise einen in direkter Nähe zum Ölwannenboden platzierten separaten Filter, umfassen wenigstens ein Ölfiltermedium und ein Ölfiltergehäuse, der vorzugsweise als Saugölfilter ausgebildet ist, auf. Derartige Ölwannen mit einem solchen Ölfilter sind beispielsweise aus den Dokumenten EP 1 339 954 B1, EP 1 333 160 A1 und DE 10 2005 025 726 A1 bekannt. Problematisch bei den vorstehend angegebenen Filtern ist, dass durch die Separierung der Bauteile, wie insbesondere der Ölwanne und dem Ölfilter, eine aufwändige Befestigung und/oder Fixierung der Bauteile untereinander notwendig ist. Eine Verbindung dieser Bauteile erfolgt gemäß des Standes der Technik beispielsweise durch eine Vernietung etc. Des Weiteren weisen separat in einer Ölwanne platzierle Ölfilter einen Spalt zwischen der Filterunterseite und der Innenseite der Ölwanne auf, der ein unkontrolliertes Luftansaugen sowie die Entwicklung von Geräuschen durch Bewegung des losen Filters in der Ölwanne zur Folge hat. Dies hat eine Senkung der Filtereffizienz und eine Reduktion des Einsatzkomforts zur Folge.

Gemäß einem anderen Ansatz des Standes der Technik wird der Filter fest und nicht mehr lösbar, durch beispielsweise Verschweißen und/oder Verkleben in der Ölwanne befestigt. Dies ist beispielsweise aus der DE 100 08 692 A1 und der DE 197 35 445 A1 bekannt. Nachteilig an diesen Ausführungsformen ist jedoch, dass ein separater Austausch des Filters nicht möglich ist und ein Austausch der Ölwannen-Ölfiltereinheit somit sehr aufwändig und kostenintensiv ist.

### Beschreibung der Erfindung

Es ist eine Aufgabe der vorliegenden Erfindung, eine Ölwanne mit einem Ölfilter anzugeben, die die vorstehend dargelegten Nachteile nicht mehr aufweist bzw. insbesondere eine Ölwanne, vorzugsweise aus Metall oder Kunststoff, mit einem Ölfilter anzugeben, in der der Ölfilter fest integrierbar ist, wobei gleichzeitig die Anzahl der notwendigen Bauteilkomponenten reduziert, die Montage erleichtert, die Kosten zur Herstellung und Installation gesenkt, unerwünschte nachteilige technische Effekte reduziert und der Filter bei Bedarf einfach wechselbar und somit separierbar in der Ölwanne angeordnet sein soll.

Die Aufgabe wird gelöst durch den Gegenstand des unabhängigen Anspruches 1. Vorteilhafte Ausführungsformen der Erfindung gehen aus den abhängigen Ansprüchen hervor.

Die erfindungsgemäße Ölwanne ist vorzugsweise ganz oder teilweise aus Kunststoff oder Metall, und sie ist insbesondere für Motoren oder Getriebe geeignet. Sie umfasst ein Filtergehäuse und eine Ölablassöffnung im Bodenbereich der Ölwanne. Das Filtergehäuse umfasst dabei eine Filtergehäuseoberschale, eine Filtergehäuseunterschale, ein Filtermedium, einen Filtereinlass und einen Filterauslass. Grundsätzlich ist der Aufbau eines solchen Filtergehäuses aus dem Stand der Technik bekannt. Die Ölablassöffnung im Bodenbereich der Ölwanne ist in einer Weise ausgebildet, dass sie mittels einer von der Ölwannenunterseite kommenden Ölablassschraube mit Außengewinde verschließbar ist. Erfindungsgemäß weist die Ölwanne eine Trägereinheit mit einem Rahmen auf, an dem das Filtergehäuse befestigt ist und der bei einer Befestigung der Ölwanne an der dazugehörigen Einheit, insbesondere an einem Motorblock oder einer Getriebeeinheit, als Dichtung dient. Diese Befestigung kann dabei unmittelbar oder mittelbar erfolgen, sie kann lösbar oder aber nicht lösbar sein. Die Trägereinheit kann dabei einstückig oder mehrstückig ausgebildet sein. Sie kann aus einem einzigen Material oder aus verschiedenen Materialien hergestellt sein, dies gilt auch für ihre jeweiligen Bestandteile. Dadurch, dass das Filtergehäuse an der Trägereinheit befestigt ist, kann es gemeinsam mit der Trägereinheit bei einem eventuellen Filterwechsel aus der Ölwanne entnommen werden. Die Verwendung der Trägereinheit erleichtert somit den Zugriff auf das Filtergehäuse. Der Rahmen der Trägereinheit dient bei einer Befestigung der Ölwanne an der dazugehörigen Einheit wie beispielsweise einem Motorblock oder einer Getriebeeinheit als Dichtung. Dies setzt voraus, dass zum einen das Material des Rahmens der Trägereinheit entsprechend gewählt wird, und dass die Abmessungen des Rahmens an die Ölwanne bzw. deren äußerer Abmessungen, insbesondere deren Außenrand, angepasst ist, damit möglichst der Dichtungseffekt aufgrund der Trägereinheit bei einer Befestigung der Ölwanne an der dazugehörigen Einheit vollumfänglich erzielt werden kann. Die integrierte Ausbildung von Trägereinheit mit einem Rahmen, der Dichtungseigenschaften hat, und mit dem Filtergehäuse hat den Vorteil, dass die Anzahl der benötigten Einzelteile weiter reduziert wird. Es ist insbesondere nicht mehr notwendig, eine separate Dichtung für die Befestigung der Ölwanne an ihrer zugehörigen Einheit zu verwenden. Bevorzugt erfolgt die Befestigung der Ölwanne an ihrer zugehörigen funktionellen Einheit durch Verschrauben.

Gemäß einer bevorzugten Ausführungsform der Erfindung ist die Filtergehäuseoberschale an dem Rahmen der Trägereinheit befestigt. Gemäß einer anderen bevorzugten Ausführungsform ist die Filtergehäuseunterschale an dem Rahmen der Trägereinheit befestigt. Die Befestigung kann dabei jeweils unmittelbar oder aber mittelbar erfolgen, sie kann lösbar oder aber auch nicht lösbar sein. Die Befestigung erfolgt beispielsweise durch Schweißen, Verkleben, Verklipsen usw.

Gemäß einer bevorzugten Ausführungsform der Erfindung weist der Rahmen der Trägereinheit Bohrungen zur Aufnahme von Schrauben auf, die an Stellen vorgesehen sind, an denen auch ein Außenrand der Ölwanne Bohrungen aufweist, so dass die Ölwanne an der dazugehörigen Einheit, insbesondere einem Motorblock oder einer Getriebeeinheit, befestigt werden kann und der Rahmen als Dichtung dient. Wird die Trägereinheit mit dem Filtergehäuse in eine Ölwanne eingesetzt, so ist aus der Position des Rahmens verglichen mit den Außenabmessungen, insbesondere dem Außenrand, der Ölwanne sofort ersichtlich, ob die Trägereinheit und mit ihr das Filtergehäuse korrekt in der Ölwanne platziert ist. Zum einen wird dies durch das Übereinstimmen der vorgesehenen Bohrungen in Trägereinheit und Ölwannenrand deutlich, zum anderen natürlich auch an einer Übereinstimmung der äußeren Abmessungen von Trägereinheit bzw. Rahmen einerseits und Außenabmessungen der Ölwanne andererseits. Auch ist es möglich, auf besonders einfache Weise die Ölwanne mit ihrer dazugehörigen Einheit unter Verwendung der Trägereinheit bzw. ihres Rahmens als Dichtungselement zu verbinden.

Als dazugehörige Einheit wird dabei jeweils eine funktionelle Einheit verstanden, für deren korrektes Funktionieren das Vorsehen einer Ölwanne erfolgt. Im Falle einer Ölwanne für Motoren ist dies der Motorblock, im Falle einer Ölwanne für Getriebe ist dies die Getriebeeinheit. Weitere Anwendungsfälle erschließen sich dem Fachmann unmittelbar.

Der Rahmen der Trägereinheit kann erfindungsgemäß unterschiedliche Außenabmessungen und/oder Breiten aufweisen. Insbesondere ist es möglich, seine äußere Formgebung an jede bekannte Ölwanne individuell anzupassen bzw. in Serie vorzufertigen.

Gemäß einer weiteren bevorzugten Ausführungsform der Erfindung weist die Trägereinheit einen Steg oder mehrere Stege auf, über den bzw. die das Filtergehäuse mit dem Trägerrahmen verbunden ist. Häufig befindet sich das Filtergehäuse in einem zentralen Bereich der Ölwanne und nicht direkt angrenzend an eine Seitenwand der Ölwanne. Um nun eine Verbindung zwischen dem Filtergehäuse und der Trägereinheit bzw. dem Rahmen der Trägereinheit herzustellen, werden Verbindungselemente von dem Filtergehäuse hin zum Rahmen der Trägereinheit vorgesehen. Diese sind bevorzugt in Form von Stegen ausgebildet. Es handelt sich dabei um verhältnismäßig schmale Verbindungselemente, die einzeln, paarweise oder in Vielzahl vorgesehen werden können. Die Abmessungen der Stege und ihrer Anzahl kann an die erforderliche Stabilität, Schwingungsverhalten etc. der gesamten Ölwanneneinheit angepasst werden. Bevorzugt ist das Filtergehäuse an wenigstens zwei Positionen jeweils mit einem oder mehreren Stegen mit dem Rahmen der Trägereinheit verbunden. Bevorzugt wird die Position dieser Verbindungselemente bzw. Stege so gewählt, dass die Entfernung zum Rahmen einerseits gering ist, und andererseits die Verbindungspunkte einander bevorzugt gegenüberliegen. Dies ermöglicht größtmögliche Stabilität. Die Stege können die Verbindung zwischen Rahmen und Filtergehäuse frei die Ölwanne durchkreuzend bilden, gemäß einer bevorzugten Ausführungsform der Erfindung sind die Stege so ausgestaltet, dass sie sich in verbundenem Zustand an den Boden der Ölwanne anschmiegen. Dies ermöglicht eine besonders gute und sichere und überdies platzsparende Befestigung.

Gemäß einer weiteren bevorzugten Ausführungsform der Erfindung weist die Ölwanne einen Magneten auf, der an der Trägereinheit befestigt oder befestigbar ist. Ein solcher Magnet ist grundsätzlich aus dem Stand der Technik bekannt und dient dazu, metallische Bestandteile in der Ölwanne einzufangen, wie beispielsweise kleine Metallpartikel, die aufgrund von Abnutzungserscheinungen in der zur Ölwanne gehörigen Funktionseinheit auftreten können. Der Magnet kann auf unterschiedlichste Weise an der Trägereinheit befestigt werden. Insbesondere kann er an der Trägereinheit lösbar befestigt werden. Bei einem Austausch des Magneten kann dieser somit zusammen mit der gesamten Trägereinheit aus der Ölwanne einfach entnommen und bei Bedarf an der Trägereinheit ausgetauscht werden. Der Magnet kann beispielsweise festgeschraubt, festgeklebt oder auch einfach durch magnetische Kräfte und/oder eine entsprechende Formgebung, z.B. Vertiefung der Trägereinheit an der für den Magneten vorgesehenen Stelle an seinem Platz in der Trägereinheit gehalten werden.

Gemäß einer weiteren bevorzugten Ausführungsform der Erfindung weist das Filtergehäuse ein Innengewinde auf, welches zur Aufnahme des Außengewindes der Ölablassschraube ausgebildet ist, und wobei das Filtergehäuse wenigstens teilweise über die die Ölablassöffnung verschließende und mit ihrem Außengewinde in das filtergehäuseseitige Innengewinde eingreifende Ölablassschraube an der Ölwanne befestigt ist. Die genannte vorteilhafte Merkmalskombination wurde auch bereits in einer anderen Patentanmeldung (unser Zeichen I.P 231 DE) der Anmelderin der vorliegenden Anmeldung beschrieben. Gemäß dieser Ausführungsform ist es damit so, dass die in Ölwannen ohnehin vorhandene Ölablassschraube nicht nur zum Verschließen der im Bodenbereich der Ölwanne vorhandenen Ölablassöffnung benutzt werden kann, sondern gleichzeitig über die Ölablassschraube wenigstens ein Teil des Filtergehäuses, insbesondere der Filtergehäuseunterschale und/oder der Filtergehäuseoberschale, an der Ölwanne befestigt werden kann. Auf diese Weise gelingt ebenfalls eine besonders effiziente und kostengünstige Positionierung wenigstens eines Teils des Ölfiltergehäuses, da eine Ölablassschraube standardmäßig in gattungsgemäßen Ölwannen bereits vorhanden ist. Der bereits bekannten Verschlussfunktion der Ölablassschraube wird somit nun auch eine Befestigungsfunktion zur Befestigung wenigstens eines Teils des Ölfiltergehäuses hinzugefügt. Zwar reicht die alleinige Befestigung des Filtergehäuses durch die Ölablassschraube an der Ölwanne oftmals bereits aus, die Verwendung eines erfindungsgemäßen Trägers mit dem Filtergehäuse ermöglicht jedoch eine einfache, zusätzliche und somit noch sicherere Fixierung des Filtergehäuses in der Ölwanne, ohne dass dabei ein zusätzlicher Arbeitsschritt notwendig würde. Dabei erfolgt die zusätzliche Befestigung des Filtergehäuses an der Ölwanne durch die Verwendung des Rahmens der Trägereinheit als Dichtungselement, und ein solches Dichtungselement hätte sonst separat ohnehin normalerweise vorgesehen werden müssen.

Gemäß einer weiteren bevorzugten Ausführungsform der Erfindung umfasst die Filtergehäuseunterschale ein Innengewinde, welches zur Aufnahme des Außengewindes der Ölablassschraube ausgebildet ist. Neben der Filtergehäuseunterschale weist das Filtergehäuse bei dieser Ausführungsform somit auch eine Filtergehäuseoberschale auf, die in geeigneter Weise mit der Filtergehäuseunterschale verbunden ist. Dazu können weitere Verbindungsmittel, vorzugsweise lösbar, wie beispielsweise Rastmittel, um einen Austausch des innerhalb des Filtergehäuses angeordneten Filtermediums zu ermöglichen, vorhanden sein. Grundsätzlich ist es in diesem Zusammenhang auch möglich, sowohl die Filtergehäuseunterschale als auch die Filtergehäuseoberschale mit einem geeigneten Innengewinde zu versehen, die im installierten Zustand in Einschraubrichtung der Ölablassschraube übereinanderliegend angeordnet sind, so dass die Ölablassschraube sowohl die Filtergehäuseunterschale als auch die Filtergehäuseoberschale an der Ölwanne befestigt.

In einer weiteren bevorzugten Ausführungsform der Erfindung wird die Filtergehäuseunterschale von einem Bodenbereich der Ölwanne gebildet, und die Filtergehäuseoberschale umfasst ein Innengewinde, welches zur Aufnahme des Außengewindes der Ölablassschraube ausgebildet ist. Bei dieser Ausführungsform ist eine separate Filtergehäuseunterschale somit nicht erforderlich, da diese Funktion durch einen Teilbereich des Ölwannenbodens erreicht wird. Die an der Ölwanne zu befestigende zur einen Seite offene Baueinheit umfasst somit wenigstens die Filtergehäuseoberschale (und gegebenenfalls auch das Filtermedium). Entsprechend ist das zur Aufnahme des Außengewindes der Ölablassschraube erforderliche Innengewinde an der Filtergehäuseoberschale angeordnet. Um den Eingriff des Außengewindes der Ölablassschraube in das filtergehäuseoberschalenseitige Innengewinde zu erleichtern, ist diese vorzugsweise in von der Innenoberfläche der Filtergehäuseoberschale abstehender und in Richtung zum Ölwannenboden zeigender Weise ausgebildet. Besonders bevorzugt steht das Innengewinde bzw. der das Innengewinde bildende Teil der Filtergehäuseoberschale so weit in Richtung des Ölwannenbodens vor, dass dieser Teil der Filtergehäuseoberschale im installierten Zustand auf dem Ölwannenboden aufsteht bzw. mit diesem in Kontakt ist. Auf diese Weise wird die Filtergehäuseoberschale besonders gut an der Ölwanne befestigt.

Im Folgenden soll die Erfindung anhand der in den Zeichnungen dargestellten Ausführungsbeispiele weiter beschrieben werden:
- Fig. 1: zeigt eine Draufsicht auf eine erfindungsgemäße Ölwanne mit einem Filtergehäuse und mit einer Trägereinheit;
- Fig. 2: zeigt eine seitliche Schnittdarstellung durch die in Fig. 1 gezeigte Ölwanne entlang der Schnittlinie A;
- Fig. 3: zeigt eine seitliche Schnittdarstellung durch die in Fig. 1 gezeigte Ölwanne entlang der Schnittlinie B.

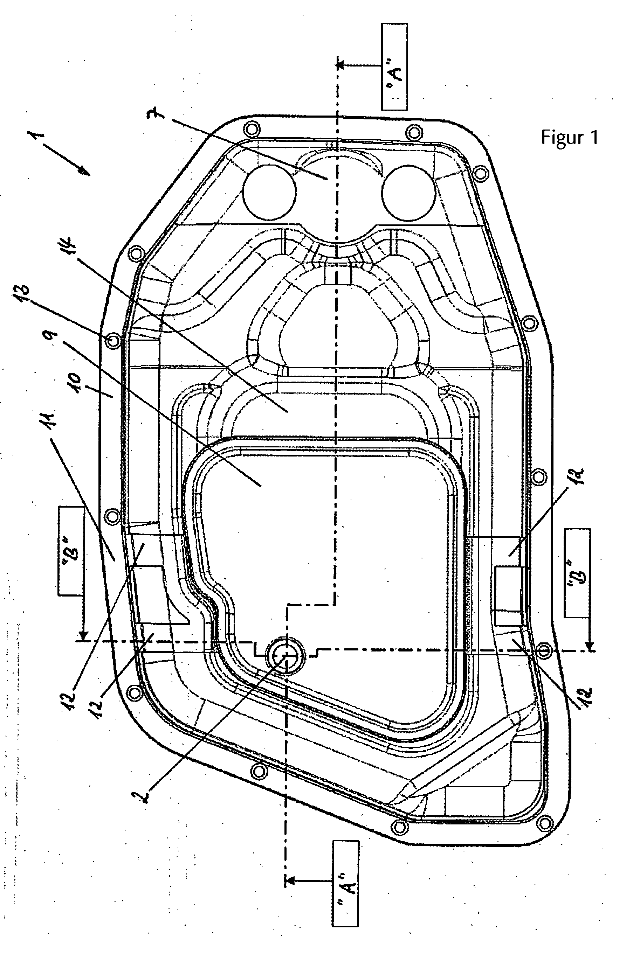

Fig. 1 zeigt eine Draufsicht auf eine erfindungsgemäße Ölwanne 1 aus Aluminium mit Filtergehäuse 9 und Trägereinheit 11. Die grundlegenden Bestandteile der Ölwanne 1 sind in dieser Draufsicht gut zu erkennen. Die Ölwanne 1 ist im gezeigten Ausführungsbeispiel unregelmäßig geformt und weist in ihrem zentralen Bereich mehrere Vertiefungen im Boden 14 der Ölwanne 1 auf. In einem zentralen Bereich der Ölwanne 1 befindet sich das Filtergehäuse 9. Das Filtergehäuse 9 ist über Stege 12 mit einem Rahmen 10 verknüpft. Der Rahmen 10 bildet einen Bestandteil der Trägereinheit 11, mit der das Filtergehäuse 9 über die Stege 12 verbunden ist. Auf diese Weise bildet die Trägereinheit 11 mit dem Filtergehäuse 9 eine Einheit, die in dieser Einheit in die Ölwanne 1 eingesetzt und auch wieder aus dieser entnommen werden kann. Der Rahmen 10 der Trägereinheit 11 ist umlaufend, d.h. als vollständig geschlossener Rahmen ausgebildet. In seinen äußeren Abmessungen entspricht er dem darunter befindlichen Rand der Ölwanne 1. Sowohl im Rahmen 10 der Trägereinheit 11, als auch in dem darunter befindlichen Rand der Ölwanne 1 sind Bohrungen 13 vorgesehen, die in ihrer Position aufeinander abgestimmt sind. Auf diese Weise kann bei entsprechender Materialauswahl für den Rahmen 10 der Trägereinheit 11 eine Dichtung zwischen der Ölwanne 1 und der zur Ölwanne gehörenden Einheit (nicht dargestellt) hergestellt werden, wenn die Ölwanne 1 an der dazugehörenden Einheit befestigt, insbesondere angeschraubt wird. Als Dichtungsmaterial ist beispielsweise Ethylen-Acrylat-Kautschuk, welches an Rahmen 10 angespritzt ist, gut geeignet. Im rechten Bereich von Fig. 1 ist ein Magnet 7 zu erkennen. Dieser ist ebenfalls an der Trägereinheit 11 befestigt. Zu diesem Zweck weist die Trägereinheit 11 in einem bestimmten Bereich des Rahmens 10 eine Aufnahmefläche auf, um den Magneten 7 aufzunehmen.

Im gezeigten Ausführungsbeispiel sind zwei Stegpaare 12 zur Befestigung der Filtereinheit 9 an der Trägereinheit 10 vorgesehen. Die beiden Stegpaare sind an unterschiedlichen Stellen des Filtergehäuses 9 einander gegenüberliegend angebracht, und der jeweils durch sie überbrückte Abstand zwischen dem Filtergehäuse 9 und dem Rahmen 10 der Trägereinheit 11 ist verhältnismäßig gering. Es wäre aber auch denkbar, die Stege 12 an anderen Positionen und nicht in Form von gegenüberliegenden Stegpaaren vorzusehen. Im gezeigten Ausführungsbeispiel schmiegen sich die Stege an den Ölwannenboden an.

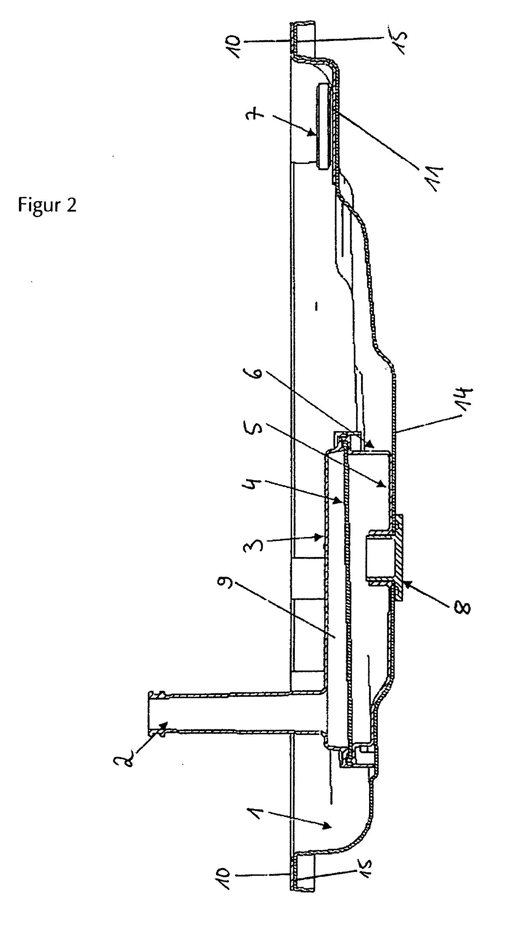

Fig. 2 zeigt eine seitliche Schnittdarstellung durch die in Fig. 1 gezeigte Ölwanne 1 entlang der Schnittlinie A. In dieser Schnittansicht ist der grundsätzliche Aufbau des Filtergehäuses 9 gut zu erkennen. Das Filtergehäuse 9 setzt sich zusammen aus einer Oberschale 3 und einer Filterunterschale 5. Zwischen diesen beiden Schalen befindet sich das Filtermedium 4. Angrenzend an die Filteroberschale 3 ist ein Filterauslass 2 vorgesehen. In der in Fig. 2 gezeigten Darstellung seitlich rechts an der Filterunterschale 5 befindet sich der Filtereinlass 6. Die Filterunterschale 5 ist mit einem Innengewinde versehen, in das ein Außengewinde der Ölablassschraube 8 aufgenommen ist. Auf diese Weise ist es möglich, das Filtergehäuse wenigstens teilweise über die die Ölablassöffnung verschließende und mit ihrem Außengewinde in das filtergehäuseseitige Innengewinde eingreifende Ölablassschraube 8 an der Ölwanne 1 zu befestigen. Wie bereits im Allgemeinen Teil der Beschreibung der Erfindung ausgeführt, ist es auch möglich, dass das Filtergehäuse 9 eine Filtergehäuseoberschale aufweist, die Filtergehäuseunterschale jedoch konstruktiv durch einen Bodenbereich 14 der Ölwanne 1 gebildet wird. In diesem Fall umfasst die Filtergehäuseoberschale 3 ein Innengewinde, welches zur Aufnahme des Außengewindes der Ölablassschraube 8 ausgebildet ist.

Das Filtergehäuse 9 ist mit der Trägereinheit 11 verbunden. In der in Fig. 2 gezeigten Schnittdarstellung entlang der Schnittlinie A ist diese Verbindung allerdings nicht zu erkennen, da entlang der Schnittlinie A diese Verbindung nicht vorhanden ist, dies ist nur entlang der Schnittlinie B der Fall. Stattdessen ist links in Fig. 2 ein Bereich des Rahmens 10 der Trägereinheit 1 1 zu erkennen. Dieser liegt auf einem Rand 15 der Ölwanne 1 auf. Im rechten Bereich von Fig. 2 ist wiederum ein Abschnitt des Rahmens 10 der Trägereinheit 11 zu erkennen. Dieser liegt wiederum auf einem Rand 15 der Ölwanne 1 auf. Des Weiteren erstreckt sich ausgehend von dem Bereich des Randes 10 die Trägereinheit 11 weiter nach links, d.h. in den zentralen Bereich der Ölwanne 1 hinein. Es wird im gezeigten Beispiel eine abgesenkte Aufnahmefläche der Trägereinheit 11 ausgebildet, an der der Magnet 7 befestigt ist. Die Bestandteile, die in Fig. 2 zur Trägereinheit 11 zählen bzw. fest mit dieser verbunden sind (wie beispielsweise das gesamte Filtergehäuse 9 mit seinen Bestandteilen) weisen in Fig. 2 dieselbe Schraffur auf. Des Weiteren ist in Fig. 2 zu erkennen, dass die Unterschale 5 des Filtergehäuses 9 in ihrer Formgebung an die Formgebung des Bodens 14 der Ölwanne 11 angepasst ist. Dies ermöglicht ein besonders einfaches und passgenaues sowie platzsparendes Verbinden des Filtergehäuses 9 mit dem Boden 14 der Ölwanne 1.

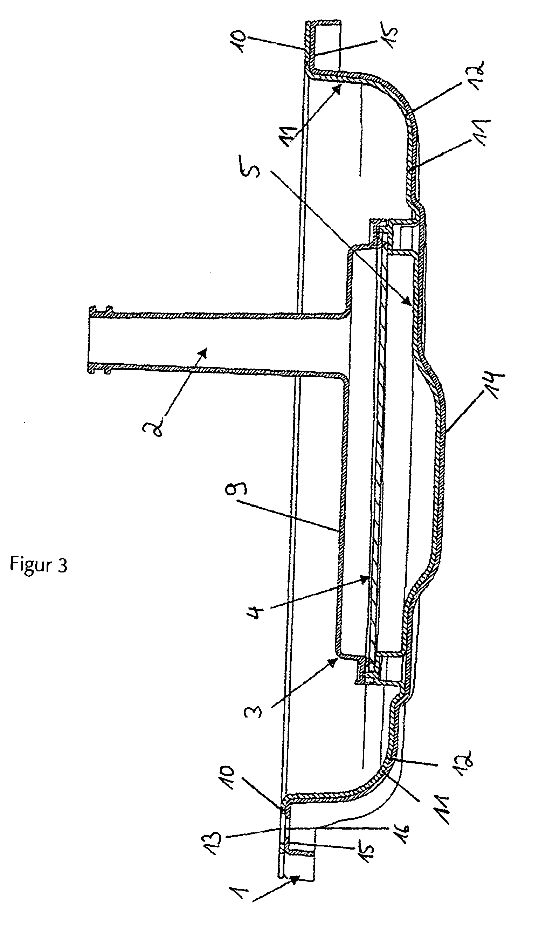

Fig. 3 zeigt eine seitliche Schnittdarstellung durch die in Fig. 1 gezeigte Ölwanne 1 entlang der Schnittlinie B. In dieser Schnittdarstellung ist gut zu erkennen, dass eine durchgehende Verbindung zwischen dem Rahmen 10 der Trägereinheit 11 auf beiden Seiten der Darstellung in Fig. 3 und dem Filtergehäuse 9 mit seinen einzelnen Bestandteilen besteht. Die Verbindung erfolgt über Stege 12 der Trägereinheit 11. Im gezeigten Ausführungsbeispiel sind die Stege 12 dabei so ausgestaltet, dass sie am Boden 14 der Ölwanne 1 anliegen bzw. sich an diese anschmiegen. Links in Fig. 3 ist eine Bohrung 13 durch die Trägereinheit 11 bzw. den Rahmen 10 der Trägereinheit 11 zu erkennen. Diese Bohrung 13 koinzidiert mit einer Bohrung 16, die am Rand 15 der Ölwanne 1 vorgesehen ist. Auf diese Weise kann die Trägereinheit 11 zum einen exakt in der Ölwanne 1 platziert werden, und zum anderen kann durch die Öffnungen 13 und 16 eine Schraube zu Befestigungszwecken hindurchgeführt werden, um die Ölwanne 1 mit dem in ihr befindlichen Filtergehäuse 9 an der der Ölwanne 1 zugehörigen funktionellen Einheit zu befestigen. Dabei dient der Rand 10 als Dichtung.

Mithilfe der Erfindung ist es möglich, ein Filtergehäuse 9 auf einfache Weise in der Ölwanne 1 zu platzieren und zu befestigen. Zugleich ist es überflüssig, für das nachfolgende Anbringen der Ölwanne 1 an einer dazugehörigen funktionellen Einheit separate Dichtungen vorzusehen, da der Rahmen 10 der Trägereinheit 11 diese Funktion automatisch mit gewährleistet. Zudem sorgt die Ausbildung einer Trägereinheit 11, an der das Filtergehäuse 9 befestigt ist, für eine noch größere Stabilität und bessere Handhabbarkeit der gesamten Vorrichtung. Insbesondere kombiniert mit einer Befestigung des Filtergehäuses 9 am Boden 14 der Ölwanne 1 durch die ohnehin vorhandene Ölablassschraube 8 ergibt sich auf diese Weise eine hochflexible Einsetzbarkeit des Filtergehäuses 9 und eine sehr sichere, reversible und einfache Befestigung des Filtergehäuses 9 in der erfindungsgemäßen Ölwanne 1.

## Patentansprüche

1. Ölwanne (1), vorzugsweise aus Kunststoff oder Metall, für Motoren oder Getriebe, mit einem Filtergehäuse (9), umfassend eine Filtergehäuseoberschale (3), eine Filtergehäuseunterschale (5), ein Filtermedium (4), einen Filtereinlass (6) und einen Filterauslass (2), und mit einer Ölablassöffnung im Bodenbereich der Ölwanne (1), die in einer Weise ausgebildet ist, dass sie mittels einer von der Ölwannenunterseite kommenden Ölablassschraube (8) mit Außengewinde verschließbar ist,
**dadurch gekennzeichnet, dass**
die Ölwanne (1) eine Trägereinheit (11) mit einem Rahmen (10) aufweist, an dem das Filtergehäuse (9) befestigt ist und der bei einer Befestigung der Ölwanne (1) an der dazugehörigen Einheit, insbesondere an einem Motorblock oder einer Getriebeeinheit, als Dichtung dient.

2. Ölwanne (1) gemäß Anspruch 1, wobei die Filtergehäuseoberschale (3) an dem Rahmen (10) der Trägereinheit (11) befestigt ist.

3. Ölwanne (1) gemäß Anspruch 1, wobei die Filtergehäuseunterschale (5) an dem Rahmen (10) der Trägereinheit (11) befestigt ist.

4. Ölwanne (1) gemäß einem der vorangehenden Ansprüche, wobei der Rahmen (10) der Trägereinheit (11) Bohrungen (13) zur Aufnahme von Schrauben aufweist, die an Stellen vorgesehen sind, an denen auch ein Außenrand (15) der Ölwanne (1) Bohrungen (16) aufweist, so dass die Ölwanne (1) an der dazugehörenden Einheit, insbesondere einem Motorblock oder einer Getriebeeinheit, befestigt werden kann und der Rahmen (10) als Dichtung dient.

5. Ölwanne (1) gemäß dem vorangehenden Anspruch, wobei die Trägereinheit (11) einstückig mit dem Filtergehäuse (9) ausgebildet ist.

6. Ölwanne (1) gemäß einem der vorangehenden Ansprüche, wobei die Trägereinheit (11) einen Steg (12) oder mehrere Stege (12) aufweist, über den bzw. die das Filtergehäuse (9) mit dem Trägerrahmen (10) verbunden ist.

7. Ölwanne (1) gemäß einem der vorangehenden Ansprüche mit einem Magneten (7), der an der Trägereinheit (11) befestigt oder befestigbar ist.

8. Ölwanne (1) gemäß einem der vorangehenden Ansprüche, wobei das Filtergehäuse (9) ein Innengewinde umfasst, welches zur Aufnahme des Außengewindes der Ölablassschraube (9) ausgebildet ist, und wobei das Filtergehäuse (9) wenigstens teilweise über die die Ölablassöffnung verschließende und mit ihrem Außengewinde in das filtergehäuseseitige Innengewinde eingreifende Ölablassschraube (8) an der Ölwanne (1) befestigt ist.

9. Ölwanne (1) gemäß Anspruch 8, wobei die Filtergehäuseunterschale (5) ein Innengewinde aufweist, welches zur Aufnahme des Außengewindes der Ölablassschraube (8) ausgebildet ist.

10. Ölwanne (1) gemäß Anspruch 8, wobei die Filtergehäuseunterschale (5) von einem Bodenbereich (14) der Ölwanne (1) gebildet wird, und wobei die Filtergehäuseoberschale (3) ein Innengewinde umfasst, welches zur Aufnahme des Außengewindes der Ölablassschraube (8) ausgebildet ist.

## Geänderte Patentansprüche

### Geänderte Patentansprüche gemäss Regel 137(2) EPÜ.

**1.** Ölwanne (1), vorzugsweise aus Kunststoff oder Metall, für Motoren oder Getriebe, mit einem Filtergehäuse (9), umfassend eine Filtergehäuseoberschale (3), eine Filtergehäuseunterschale (5), ein Filtermedium (4), einen Filtereinlass (6) und einen Filterauslass (2), und mit einer Ölablassöffnung im Bodenbereich der Ölwanne (1), die in einer Weise ausgebildet ist, dass sie mittels einer von der Ölwannenunterseite kommenden Ölablassschraube (8) mit Außengewinde verschließbar ist,
**dadurch gekennzeichnet, dass**
die Ölwanne (1) eine Trägereinheit (11) mit einem Rahmen (10) aufweist, an dem das Filtergehäuse (9) befestigt ist, wobei der Rahmen (10) bei einer Befestigung der Ölwanne (1) an der zur Ölwanne (1) dazugehörigen funktionellen Einheit als Dichtung dient, mittels derer ein Dichtungseffekt zwischen der Ölwanne (1) und der dazugehörigen funktionellen Einheit vollumfänglich erzielt werden kann.

**2.** Ölwanne (1) gemäß Anspruch 1, wobei die Filtergehäuseoberschale (3) an dem Rahmen (10) der Trägereinheit (11) befestigt ist.

**3.** Ölwanne (1) gemäß Anspruch 1, wobei die Filtergehäuseunterschale (5) an dem Rahmen (10) der Trägereinheit (11) befestigt ist.

**4.** Ölwanne (1) gemäß einem der vorangehenden Ansprüche, wobei der Rahmen (10) der Trägereinheit (11) Bohrungen (13) zur Aufnahme von Schrauben aufweist, die an Stellen vorgesehen sind, an denen auch ein Außenrand (15) der Ölwanne (1) Bohrungen (16) aufweist, so dass die Ölwanne (1) an der dazugehörenden Einheit, insbesondere einem Motorblock oder einer Getriebeeinheit, befestigt werden kann und der Rahmen (10) als Dichtung dient.

**5.** Ölwanne (1) gemäß dem vorangehenden Anspruch, wobei die Trägereinheit (11) einstückig mit dem Filtergehäuse (9) ausgebildet ist.

**6.** Ölwanne (1) gemäß einem der vorangehenden Ansprüche, wobei die Trägereinheit (11) einen Steg (12) oder mehrere Stege (12) aufweist, über den bzw. die das Filtergehäuse (9) mit dem Trägerrahmen (10) verbunden ist.

**7.** Ölwanne (1) gemäß einem der vorangehenden Ansprüche mit einem Magneten (7), der an der Trägereinheit (11) befestigt oder befestigbar ist.

**8.** Ölwanne (1) gemäß einem der vorangehenden Ansprüche, wobei das Filtergehäuse (9) ein Innengewinde umfasst, welches zur Aufnahme des Außengewindes der Ölablassschraube (9) ausgebildet ist, und wobei das Filtergehäuse (9) wenigstens teilweise über die die Ölablassöffnung verschließende und mit ihrem Außengewinde in das filtergehäuseseitige Innengewinde eingreifende Ölablassschraube (8) an der Ölwanne (1) befestigt ist.

**9.** Ölwanne (1) gemäß Anspruch 8, wobei die Filtergehäuseunterschale (5) ein Innengewinde aufweist, welches zur Aufnahme des Außengewindes der Ölablassschraube (8) ausgebildet ist.

**10.** Ölwanne (1) gemäß Anspruch 8, wobei die Filtergehäuseunterschale (5) von einem Bodenbereich (14) der Ölwanne (1) gebildet wird, und wobei die Filtergehäuseoberschale (3) ein Innengewinde umfasst, welches zur Aufnahme des Außengewindes der Ölablassschraube (8) ausgebildet ist.
